(19) Europäisches Patentamt
European Patent Office
Office européen des brevets

(11) **EP 3 681 302 B1**

(12) **EUROPEAN PATENT SPECIFICATION**

(45) Date of publication and mention
of the grant of the patent:
**22.01.2025 Bulletin 2025/04**

(21) Application number: **18766258.0**

(22) Date of filing: **10.09.2018**

(51) International Patent Classification (IPC):
**A23F 3/16** *(2006.01)* **A23F 3/18** *(2006.01)*

(52) Cooperative Patent Classification (CPC):
**A23F 3/163; A23F 3/18**

(86) International application number:
**PCT/EP2018/074343**

(87) International publication number:
**WO 2019/052964 (21.03.2019 Gazette 2019/12)**

(54) **PROCESS FOR PREPARING BLACK TEA PRODUCTS**

VERFAHREN ZUR HERSTELLUNG VON SCHWARZEN TEEPRODUKTEN

PROCÉDÉ POUR LA PRÉPARATION DE PRODUITS DE THÉ NOIR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.09.2017 EP 17190794**

(43) Date of publication of application:
**22.07.2020 Bulletin 2020/30**

(73) Proprietor: **Unilever IP Holdings B.V.
3013 AL Rotterdam (NL)**

(72) Inventor: **ZHU, Shiping
Sharnbrook
Bedfordshire MK44 1LQ (GB)**

(74) Representative: **Keenan, Robert Daniel
Unilever Patent Group
Bronland 14
6708 WH Wageningen (NL)**

(56) References cited:
**EP-A1- 0 083 570        EP-A1- 1 472 932
EP-B1- 0 083 570        EP-B1- 1 472 932
WO-A1-2004/082390        WO-A1-2017/008943
US-A- 5 427 806        US-A- 5 529 796**

## Description

### Field of the invention

The present invention relates to a process for preparing black tea products, and particularly to a process for preparing black tea extracts.

### Background of the invention

Tea has been consumed as a beverage for well over 2000 years and, excluding water, it is the most popular beverage consumed by man. Tea is very refreshing, can be served either hot or cold, and has been commercially available for many years.

Packaged ready-to-drink (RTD) tea beverages, such as iced tea, are popular with consumers (e.g. as an alternative to carbonated soft drinks). These beverages are usually made from tea extracts. Unfortunately, such beverages often develop haze and/or sediment upon storage, which makes their appearance less attractive. Haze formation in RTD beverages not only influences the appearance of the product, giving the impression that the beverage is spoiled, but also accelerates the loss of both taste and colour.

For RTD beverages with fruit flavours, acidification is required to prepare formulations with desirable flavour balance. Acidification may also be advantageous with respect to improving the microbiological stability of RTD tea beverages. Unfortunately, sedimentation of solids form such acidified beverages is particularly pronounced, and can occur after storage periods ranging from as little as a week to as long as 6 to 12 weeks.

Thus we have recognised that there is still a need to provide beverage products comprising tea polyphenols which have good organoleptic properties and which do not suffer from the drawbacks of haze formation and/or sedimentation.

US 5,529,796 A (Steven A. Gobbo et al.) discloses tea products as well as a process for their preparation. They are prepared by adding high methoxy pectin to an acidified tea extract obtained from low temperature extraction.

WO 2004/082390 A1 (Unilever PLC et al.) discloses a process for manufacturing a cold water soluble black leaf tea comprising the steps of (a) optionally withering freshly plucked tea leaf, (b) macerating the leaves, (c) allowing the leaves to ferment, (d) firing the leaves to arrest fermentation and (e) then drying them to yield black leaf tea, the process being characterised in that the tea leaves are treated before fermentation or before mid-fermentation with a pH lowering agent, followed by treatment during fermentation with ascorbic acid, salts of ascorbic acid or mixtures thereof at mid-fermentation or later in an amount that is sufficient for the black leaf tea to be infusible in water at 5 to 100 degrees centigrade.

### Summary of the invention

The present invention relates to a process for preparing a black tea extract, wherein the process comprises extracting black leaf tea particles with an acidic solution at a temperature of less than 35°C, wherein at least 85% by weight of the black leaf tea particles have a particle size of less than 250μm and wherein the acidic solution has a pH of 2 to 3.5.

The present invention relates to a process for extracting black leaf tea at a low temperature (sometimes referred to as "cold brewing"). Without wishing to be bound by theory, it is believed that using a relatively low temperature for the extraction improves the sensory properties of the black tea extract, particularly in terms of providing an extract with authentic tea taste and aroma. It is also envisaged that the process will require less energy than traditional processes where the extraction solvent is heated to a relatively high temperature (typically around 90°C).

In order to achieve the necessary extraction efficiency at such low temperatures, the particle size of the leaf tea is controlled such that the leaf tea particles have a particle size of less than 250μm.

We have surprisingly found that extracting the leaf tea in an acidic solution produces a tea extract which has less haze than a process wherein the leaf tea is extracted under neutral conditions and then subsequently acidified. This effect is more pronounced for black leaf tea with a small particle size.

The black tea extract can be used to formulate a ready-to-drink (RTD) beverage. Since such RTD beverages are typically acidified, the present process does not require the addition of any ingredients that are not normally present in the final product. Thus it is possible to achieve a tea extract having less haze without the need for any additional ingredients over and above those habitually present in the end product based on such extracts.

### Detailed description of the invention

The present invention relates to a process in which black leaf tea particles are extracted at low temperature under acidic conditions to produce a black tea extract. More particularly, it relates to a process for preparing a black tea extract, wherein the process comprises extracting black leaf tea particles with an acidic solution at a temperature of less than 35°C, wherein the black leaf tea particles have a particle size of less than 250μm.

less than 35°C, wherein the black leaf tea particles have a particle size of less than 250μm.

As used herein, the term "leaf tea" refers to leaf and/or stem material from *Camellia sinensis var. sinensis* and/or *Camellia sinensis var. assamica* in an uninfused form (i.e. which has not been subjected to a solvent extraction step). So-called "black leaf tea", refers to substantially fermented leaf tea. For example, black leaf tea is routinely obtained by harvesting leaves of the plant *Camellia sinensis* and withering, macerating, enzymatically oxidising (fermenting), firing and sorting them. Black leaf tea can readily be purchased at tea auctions.

The black leaf tea particles used in the present process have a particle size (i.e. longest diameter) of less than 250μm, preferably less than 200μm, more preferably less than 150μm and most preferably less than 100μm. Although there is no particular limitation on the lower end of the particle size range, the black leaf tea particles preferably have a particle size of greater than 5μm, more preferably greater than 10μm, still more preferably greater than 20μm.

At least 85% by weight of the leaf tea starting material has the specified particle size, more preferably at least 90% by weight, still more preferably at least 95% by weight, and most preferably at least 99% by weight. The weight percentage of particles having a particular particle size can be determined by sorting into fractions according to particle size (e.g. by sieving) and then weighing the fractions. When determining particle size, the leaf tea particles are in a dried format and have a moisture content of less than 30 wt.% (typically 1 to 10 wt.%).

Leaf tea contains material having a range of particle sizes as a result of the normal manufacturing process. Indeed, leaf tea is typically sorted into various grades (e.g. whole leaf, brokens, fannings and dusts) prior to being sold at auction. One way of sorting tea is according to particle size. For example, the leaf tea may be passed through a series of vibrating screens where the various grades are retained and collected. Leaf tea particles having a particle size of less than 250 μm could be separated in this manner.

Although it is possible to obtain black leaf tea particles from commercially available black leaf tea by sieving (as described above), this is not very efficient as only a small proportion of the leaf tea will be of the appropriate size. Thus, the process preferably comprises the step of grinding black leaf to obtain black leaf tea particles in order to increase the proportion of the leaf tea having the appropriate particle size. For example, the leaf tea can be ground using impact mills, hammer mills, ball mills, jet mills, cone mills, roll mills, stone mills, and the like. The ground leaf tea can optionally be passed through a series of vibrating screens as described above in order to select fractions having a particular particle size.

Without wishing to be bound by theory, we believe that leaf tea particles having a particle size of greater than 250 μm have a detrimental effect on extraction efficiency due to the fact that they have a reduced surface area to volume ratio when compared with smaller leaf tea particles. Since leaf tea particles with a particle size of greater than 250 μm are easily removed following grinding and/or sieving, it is possible to ensure that only a minor amount of particles of this size will be present. Preferably the amount of leaf tea particles having a particle size of greater than 250 μm is less than 15 % by weight, more preferably less than 10 % by weight, still more preferably less than 5 % by weight, and most preferably less than 1 % by weight.

The black leaf tea particles are extracted with an acidic solution. Extraction of the black leaf tea particles with an acidic solution provides a black tea extract with low haze. It is noted that adding an equivalent amount of acid to the tea extract (i.e. post-extraction acidification) does not have the same effect. Indeed, post-extraction acidification actually increases the level of haze in the tea extract.

The acidic solution preferably comprises an organic acid such as citric acid, malic acid, tartaric acid, ascorbic acid. The acidic solution may comprise a mixture of two or more of these organic acids. Typically the concentration of the acid in the acidic solution will be from 0.01 to 2% by weight, more preferably from 0.05 to 1.5% by weight, still more preferably from 0.1 to 1% by weight. The pH range of the acidic solution is not critical. However, it is generally in the range of 2 to 3.5, and is preferably from 2 to 3. Unless otherwise specified, pH is measured at 20°C.

preferably from 0.1 to 1% by weight. The pH range of the acidic solution is in the range of 2 to 3.5, and is preferably from 2 to 3. Unless otherwise specified, pH is measured at 20°C.

The black tea extract obtained by the process may have a different pH to the extraction solvent. Without wishing to be bound by theory, it is believed that the extraction solids have a buffering effect and thus the pH of the extract is typically higher than the pH of the extraction solvent. Preferably the black tea extract has a pH (at 20°C) of less than 5, more preferably from 2.5 to 4.5, still more preferably from 2.5 to 4.

The black tea extract can be used to formulate a ready-to-drink (RTD) beverage, thus it is preferred that the acidic solution comprises an edible acid. The acidic solution preferably comprises citric acid, since this acid is commonly used as an acidulant in RTD beverages. In order to allow the formulation of an RTD beverage with a particularly well-balanced flavour from the black tea extract, the acidic solution preferably comprises citric acid and additionally comprises malic acid and/or ascorbic acid.

The black leaf tea particles are extracted at a temperature of less than 35°C. Without wishing to be bound by theory, it is believed that using a relatively low temperature for the extraction improves the sensory properties of the black tea extract, particularly in terms of providing an extract with authentic tea taste and aroma. It is also envisaged that the process will require less energy than traditional processes where the extraction solvent is heated to a relatively high temperature (typically around 90°C). The extraction temperature is preferably 10°C to 30°C, more preferably 15°C to 25°C.

There is no particular limitation with regard to the duration of the extraction step. However, relatively short extraction times are preferred. For example, the black leaf tea particles are preferably extracted with the acidic solution for less than 20 minutes, more preferably less than 10 minutes. The skilled person will appreciate that a certain minimum extraction time will be required in order to permit extraction of tea solids from the leaf tea particles. Thus the duration of the extraction is preferably at least 1 minute, more preferably at least 2 minutes.

tea particles tend to swell during the extraction, the pore size of the filter need not be as small as the smallest leaf tea particles used as starting material for the process.

The acidic solution may comprise additional ingredients. For example, the acidic solution may comprise common RTD beverage ingredients such as sweeteners, flavours, preservatives, and the like. Alternatively, these ingredients may be added to the black tea extract post-extraction.

Although it is necessary to extract the black leaf tea particles with an acidic solution, it is not necessary to prepare the acidic solution and the black leaf tea particles separately. For example, it is envisaged that the black leaf tea particles and acid can be mixed as dry ingredients, with the subsequent addition of solvent (typically water). This would be advantageous, since it would allow the mixture of dry ingredients to be made at one location, and then shipped to a second location where the extraction process could be carried out. Black leaf tea could also be ground in the presence of acid - either by mixing black leaf tea and acid as dry ingredients and then grinding the mixture or by grinding the black leaf tea in the presence of the acidic solution (e.g. wet milling of the black leaf tea).

As used herein the term "comprising" encompasses the terms "consisting essentially of" and "consisting of". Where the term "comprising" is used, the listed steps or options need not be exhaustive. As used herein, the indefinite article "a" or "an" and its corresponding definite article "the" means at least one, or one or more, unless specified otherwise.

Unless otherwise specified, numerical ranges expressed in the format "from x to y" are understood to include x and y. In specifying any range of values or amounts, any particular upper value or amount can be associated with any particular lower value or amount. Except in the examples and comparative experiments, or where otherwise explicitly indicated, all numbers are to be understood as modified by the word "about". All percentages and ratios contained herein are calculated by weight unless otherwise indicated.

The various features of the present invention referred to in individual sections above apply, as appropriate, to other sections *mutatis mutandis*. Consequently features specified in one section may be combined with features specified in other sections as appropriate. Any section headings are added for convenience only, and are not intended to limit the disclosure in any way.

The following examples are intended to illustrate the invention and are not intended to limit the invention to those examples *per se.*

## Examples

### Example 1

Black leaf tea was standard PF1 grade material. This was obtained via normal tea processing in a Kenyan factory comprising plucking, withering, maceration, fermentation, drying and size grading.

a) Milling

A 160UPZ impact mill (Hosokawa Micro UK) was used to mill standard PF1 grade material into fine particles of relative wider size distribution. The machine was operated at 6000 rpm, with a feeding rate of 60 kg/hr. The ground particles were then screened using ATS600 classifier (Allgaier GmbH) into different narrow size fractions of:

- less than 26 $\mu$m,
- 26 to 53 $\mu$m (fraction 1),
- 150 to 250 $\mu$m (fraction 2), and
- greater than 250 $\mu$m.

b) Extraction conditions

10g of the appropriate leaf tea sample (PF1 grade, fraction 1 or fraction 2) was extracted in 300g of solvent for 5 minutes at 20°C. The solvent used to extract the leaf tea samples was either water or an aqueous solution of citric acid. Four different concentrations of citric acid solution were used: 0.08% (0.24 g in 300 g water); 0.17% (0.5 g in 300 g water);

0.67% (2 g in 300 g water); 1% (3 g in 300 g water). Table 1 summarises the extraction conditions. After extraction was completed, a 0.45 μm PES filter (Nalgene) was used to remove extracted tea particles from the extraction liquor.

Table 1

| Sample | Leaf tea | Extraction solvent |
|--------|----------|--------------------|
| 1a | fraction 1 | water |
| 1b | | 0.08% citric acid solution |
| 1c | | 0.17% citric acid solution |
| 1d | | 0.67% citric acid solution |
| 1e | | 1% citric acid solution |
| 2a | fraction 2 | water |
| 2b | | 0.08% citric acid solution |
| 2c | | 0.17% citric acid solution |
| 2d | | 0.67% citric acid solution |
| 2e | | 1% citric acid solution |
| 3a | PF1 grade | water |
| 3b | | 0.08% citric acid solution |
| 3c | | 0.17% citric acid solution |
| 3d | | 0.67% citric acid solution |
| 3e | | 1% citric acid solution |

In addition, samples were prepared wherein the extraction liquor obtained following extraction with water was acidified using the same four concentrations of citric acid used as extraction solvents. Table 2 summarises the post-extraction acidification conditions.

Table 2

| Sample | Leaf tea | Extraction solvent | Citric acid added to 300 g extraction liquor |
|--------|----------|--------------------|----------------------------------------------|
| 1f | fraction 1 | water | 0.24 g |
| 1g | | | 0.5 g |
| 1h | | | 2 g |
| 1i | | | 3 g |
| 2f | fraction 2 | water | 0.24 g |
| 2g | | | 0.5 g |
| 2h | | | 2 g |
| 2i | | | 3 g |
| 3f | PF1 grade | water | 0.24 g |
| 3g | | | 0.5 g |
| 3h | | | 2 g |
| 3i | | | 3 g |

c) Analysis of extraction liquor

Several measurements were performed on the extraction liquors. Haze was measured using a turbidimeter (2100P Turbidimeter, HACH) and pH was measured using a titrator (DL28 Titrator, Mettler Toledo). Brix was measured using a refractometer (RFM 340+ Refractometer, Bellingham + Stanley).

The concentration of tea solids in the extraction liquors was calculated from the Brix value of the extraction liquor (Brix $_{\text{tea solids}}$) using the following equation:

$$\text{Tea solid conc. (\%)} = 0.76 \times \text{Brix}_{\text{tea solids}}$$

For extraction liquors containing citric acid, the Brix value was measured before the extraction (Brix $_{\text{solvent}}$) and then measured again after the extraction (Brix $_{\text{liquor}}$). For these samples, Brix $_{\text{tea solids}}$ was calculated as follows:

$$\text{Brix}_{\text{tea solids}} = \text{Brix}_{\text{liquor}} - \text{Brix}_{\text{solvent}}$$

The extraction yield was calculated using the following equation:

$$\text{Yield (\%)} = \text{tea solid conc. (\%)} \times 30$$

Table 3 summarises experimental data relating to the tea solid concentration and extraction yield for the extraction liquors of samples 1a to 1e, 2a to 2e and 3a to 3e (i.e. samples extracted in water or an aqueous solution of citric acid). The data demonstrates that smaller particle size is associated with a higher extraction yield, and that water provides a higher extraction yield than aqueous solutions of citric acid for a given particle size.

Table 3

| Sample | Extraction solvent | | Extraction liquor | |
|---|---|---|---|---|
| | pH | Brix$_{\text{solvent}}$ | Tea solid conc. (%) | Yield (%) |
| 1a | 5.8 | 0 | 0.87 | 26.1 |
| 1b | 2.8 | 0.02 | 0.86 | 25.8 |
| 1c | 2.6 | 0.09 | 0.84 | 25.2 |
| 1d | 2.3 | 0.58 | 0.82 | 24.6 |
| 1e | 2.2 | 0.87 | 0.82 | 24.6 |
| 2a | 5.7 | 0 | 0.77 | 23.1 |
| 2b | 2.8 | 0.08 | 0.72 | 21.6 |
| 2c | 2.6 | 0.16 | 0.70 | 21.0 |
| 2d | 2.3 | 0.59 | 0.67 | 20.1 |
| 2e | 2.2 | 0.88 | 0.67 | 20.1 |
| 3a | 5.7 | 0 | 0.44 | 13.2 |
| 3b | 2.8 | 0.05 | 0.42 | 12.6 |
| 3c | 2.6 | 0.12 | 0.43 | 12.9 |
| 3d | 2.2 | 0.56 | 0.38 | 11.4 |
| 3e | 2.1 | 0.85 | 0.37 | 11.1 |

Colour can be expressed using the coordinates of the CIE 1976 L\*a\*b\* colour space. The CIE L\*a\*b\* colour space is organised in a cubic form. The L\* axis runs from top to bottom. The maximum value for L\* is 100 (which represents a perfect reflecting diffuser), and the minimum value for L\* is 0 (which represents black). The a\* and b\* axes have no specific numerical limits. The a\* axis extends from green (-a\*) to red (+a\*), and the b\* axis from blue (-b\*) to yellow (+b\*).

The colour of the extraction liquor (expressed using CIE L\*a\*b\* colour space) was measured using a spectrophotometer (CM-5 Spectrophotometer, Konica Minolta) according to the joint ISO/CIE standard (ISO 11664-4:2008(CE); CIE S 014-4/E:2007).

Table 4 summarises the colour of the infusion liquors of the samples (as measured using CIE L\*a\*b\* colour space), as well as data relating to haze, pH, and Brix $_{\text{liquor}}$.

Table 4

| Sample | Brix $_{liquor}$ | pH | Haze | L* | a* | b* |
|---|---|---|---|---|---|---|
| 1a | 1.14 | 5.0 | 12.9 | 67.58 | 32.67 | 100.28 |
| 1b | 1.15 | 4.2 | 7.8 | 77.11 | 23.21 | 101.65 |
| 1c | 1.20 | 3.8 | 6.4 | 79.78 | 19.75 | 99.03 |
| 1d | 1.66 | 3.0 | 5.1 | 82.51 | 16.69 | 94.10 |
| 1e | 1.95 | 2.8 | 4.3 | 82.45 | 17.36 | 93.91 |
| 1f | 1.21 | 3.9 | 18.5 | 72.57 | 28.62 | 104.42 |
| 1g | 1.28 | 3.5 | 27.6 | 73.39 | 27.67 | 104.19 |
| 1h | 1.75 | 2.8 | 29.9 | 74.57 | 25.78 | 102.83 |
| 1i | 2.04 | 2.6 | 29.1 | 75.11 | 24.96 | 102.5 |
| 2a | 1.01 | 5.0 | 7.4 | 69.88 | 29.66 | 99.94 |
| 2b | 1.03 | 4.2 | 4.5 | 79.15 | 19.17 | 98.45 |
| 2c | 1.08 | 3.8 | 3.1 | 82.11 | 15.00 | 94.61 |
| 2d | 1.47 | 3.0 | 1.7 | 85.98 | 9.56 | 86.56 |
| 2e | 1.76 | 2.8 | 1.5 | 86.26 | 9.52 | 85.17 |
| 2f | 1.09 | 3.9 | 10.0 | 74.56 | 25.72 | 103.45 |
| 2g | 1.16 | 3.5 | 14.0 | 75.67 | 24.36 | 103.22 |
| 2h | 1.57 | 2.8 | 24.1 | 77.19 | 21.82 | 101.96 |
| 2i | 1.88 | 2.6 | 24.5 | 77.85 | 20.83 | 101.49 |
| 3a | 0.58 | 5.1 | 2.4 | 83.39 | 10.35 | 77.48 |
| 3b | 0.60 | 4.0 | 1.6 | 89.78 | 2.15 | 63.78 |
| 3c | 0.69 | 3.6 | 1.1 | 90.55 | 1.40 | 61.24 |
| 3d | 1.06 | 2.8 | 0.6 | 92.86 | -0.41 | 48.75 |
| 3e | 1.34 | 2.6 | 0.6 | 93.13 | -0.47 | 47.10 |
| 3f | 0.65 | 3.8 | 3.0 | 86.21 | 6.97 | 75.72 |
| 3g | 0.74 | 3.3 | 3.8 | 87.28 | 5.58 | 73.53 |
| 3h | 1.14 | 2.7 | 4.6 | 88.29 | 4.36 | 70.53 |
| 3i | 1.43 | 2.5 | 5.1 | 88.40 | 4.28 | 69.63 |

When considering the colour of the extraction liquor, the L* value is of interest, with lower L* values indicating a darker liquor colour (and higher L* values indicating a lighter liquor colour). The a* value is also of interest, with higher a* values indicating a redder liquor colour. The data in Table 4 shows that post-extraction acidification is associated with a liquor colour which is darker and redder than that obtained following extraction with an acidified aqueous solution. However, post-extraction acidification results in higher levels of haze, which is an undesirable property as far as consumers are concerned. This effect is more pronounced at low pH - especially for fractions of leaf tea with a smaller particle size. This is problematic, since acidification is advantageous with respect to both improving the microbiological stability of RTD tea beverages and preparing formulations with desirable flavour balance (particularly for RTD tea beverages with fruit flavours).

In contrast, extraction of leaf tea with an aqueous solution of citric acid was found to produce extraction liquors having a significantly reduced level of haze. Particularly low levels of haze were associated with extraction solvents having a low pH.

The extraction liquors obtained from standard PF1 grade material had a low level of haze (regardless of whether the acidification occurred before or after extraction). However, the liquors had a disappointing colour (both in terms of darkness and redness) - especially when extraction was carried out using an aqueous acidic solution. It was unexpectedly found that the extraction liquors obtained from fractions 1 or 2 (i.e. leaf tea having a reduced particle size) had a much more acceptable colour than those obtained from standard PF1 grade material. However, only the extraction liquors resulting from extraction of these fractions with an aqueous acidic solution had a suitably low level of haze.

The production of extraction liquors with acceptable colour characteristics and low levels of haze from these small particle size fractions is particularly advantageous, since these liquor properties are associated with a relatively high extraction yield (see Table 3).

Thus, a process wherein black leaf tea particles having a relatively small particle size (i.e. a particle size of less than $250\mu m$) are extracted with an acidic solution has been shown to have a high extraction yield, and to result in an extraction liquor with good colour and low haze, even at low pH.

## Claims

1. A process for preparing a black tea extract, wherein the process comprises extracting black leaf tea particles with an acidic solution at a temperature of less than 35°C, wherein at least 85% by weight of the black leaf tea particles have a particle size of less than $250\mu m$ and wherein the acidic solution has a pH of 2 to 3.5.

2. A process for preparing a tea extract as claimed in claim 1 wherein the acidic solution comprises citric acid.

3. A process as claimed in claim 2 wherein the acidic solution additionally comprises malic acid and/or ascorbic acid.

4. A process as claimed any one of claims 1 to 3 wherein the acidic solution has a pH of 2 to 3.

5. A process as claimed in any one of claims 1 to 4 wherein the black leaf tea particles have a particle size of 5 to $200\mu m$, preferably 10 to $100\mu m$.

6. A process as claimed in any one of claims 1 to 5 wherein the temperature is 10°C to 30°C, preferably 15°C to 25°C.

7. A process as claimed in any one of claims 1 to 6 wherein the process comprises the step of grinding black leaf tea to obtain black leaf tea particles.

8. A process as claimed in claim 7 wherein the black leaf tea is ground in the presence of the acidic solution.

9. A process as claimed in any one of claims 1 to 7 wherein the black leaf tea particles and acid are mixed as dry ingredients, and a solvent is added in a subsequent step.

10. A process as claimed in any one of claims 1 to 9 wherein the black leaf tea particles are extracted with the acidic solution for less than 20 minutes, preferably less than 10 minutes.

11. A process as claimed in claim 10 wherein the black leaf tea particles and the sweetener are mixed as dry ingredients, and a solvent is added in a subsequent step.

12. A process as claimed in any one of claims 1 to 11 wherein the black tea extract has a pH of less than 5, and preferably has a pH of 2.5 to 4.5.

13. A process as claimed in any one of claims 1 to 12 wherein the process comprises the additional and subsequent step of separating the black leaf tea particles from the tea extract.

## Patentansprüche

1. Verfahren zur Herstellung eines Schwarztee-Extrakts, wobei das Verfahren das Extrahieren von Schwarzteeblatt-Partikeln mit einer sauren Lösung bei einer Temperatur von weniger als 35°C umfasst, wobei mindestens 85 Gewichts-% der Schwarzteeblatt-Partikel eine Partikelgröße von weniger als 250 $\mu m$ aufweisen und die saure Lösung einen pH-Wert von 2 bis 3,5 aufweist.

2. Verfahren zur Herstellung eines Tee-Extrakts, wie im Anspruch 1 beansprucht, wobei die saure Lösung Zitronensäure umfasst.

**3.** Verfahren, wie im Anspruch 2 beansprucht, wobei die saure Lösung zusätzlich Äpfelsäure und/oder Ascorbinsäure umfasst.

**4.** Verfahren, wie in irgendeinem der Ansprüche 1 bis 3 beansprucht, wobei die saure Lösung einen pH-Wert von 2 bis 3 aufweist.

**5.** Verfahren, wie in irgendeinem der Ansprüche 1 bis 4 beansprucht, wobei die Schwarzteeblatt-Partikel eine Partikelgröße von 5 bis 200 μm, bevorzugt von 10 bis 100 μm aufweisen.

**6.** Verfahren, wie in irgendeinem der Ansprüche 1 bis 5 beansprucht, wobei die Temperatur 10 bis 30°C, bevorzugt 15 bis 25°C beträgt.

**7.** Verfahren, wie in irgendeinem der Ansprüche 1 bis 6 beansprucht, wobei das Verfahren den Schritt des Mahlens von Schwarzteeblättern umfasst, um Schwarzteeblatt-Partikel zu erhalten.

**8.** Verfahren, wie im Anspruch 7 beansprucht, wobei die Schwarzteeblätter in Gegenwart der sauren Lösung gemahlen werden.

**9.** Verfahren, wie in irgendeinem der Ansprüche 1 bis 7 beansprucht, wobei die Schwarzteeblatt-Partikel und die Säure als trockene Zutaten gemischt werden und in einem nachfolgenden Schritt ein Lösungsmittel hinzugefügt wird.

**10.** Verfahren, wie in irgendeinem der Ansprüche 1 bis 9 beansprucht, wobei die Schwarzteeblatt-Partikel mit der sauren Lösung weniger als 20 Minuten, bevorzugt weniger als 10 Minuten extrahiert werden.

**11.** Verfahren, wie im Anspruch 10 beansprucht, wobei die Schwarzteeblatt-Partikel und das Süßungsmittel als trockene Zutaten gemischt werden und in einem nachfolgenden Schritt ein Lösungsmittel hinzugefügt wird.

**12.** Verfahren, wie in irgendeinem der Ansprüche 1 bis 11 beansprucht, wobei der Schwarztee-Extrakt einen pH-Wert von weniger als 5 und bevorzugt von 2,5 bis 4,5 aufweist.

**13.** Verfahren, wie in irgendeinem der Ansprüche 1 bis 12 beansprucht, wobei das Verfahren den zusätzlichen und nachfolgenden Schritt des Abtrennens der Schwarzteeblatt-Partikel vom Tee-Extrakt umfasst.

**Revendications**

**1.** Procédé de préparation d'un extrait de thé noir, où le procédé comprend l'extraction de particules de feuilles de thé noir avec une solution acide à une température inférieure à 35°C, où au moins 85 % en poids des particules de feuilles de thé noir ont une taille de particule inférieure à 250 μm et où la solution acide a un pH de 2 à 3,5.

**2.** Procédé de préparation d'un extrait de thé selon la revendication 1, où la solution acide comprend de l'acide citrique.

**3.** Procédé selon la revendication 2, où la solution acide comprend en outre de l'acide malique et/ou de l'acide ascorbique.

**4.** Procédé selon l'une quelconque des revendications 1 à 3, où la solution acide a un pH de 2 à 3.

**5.** Procédé selon l'une quelconque des revendications 1 à 4, où les particules de feuilles de thé noir ont une taille de particule de 5 à 200 μm, de préférence de 10 à 100 μm.

**6.** Procédé selon l'une quelconque des revendications 1 à 5, où la température est 10°C à 30°C, de préférence 15°C à 25°C.

**7.** Procédé selon l'une quelconque des revendications 1 à 6, où le procédé comprend l'étape de broyage de feuilles de thé noir pour obtenir des particules de feuilles de thé noir.

**8.** Procédé selon la revendication 7, où la feuille de thé noir est broyée en présence de la solution acide.

9.  Procédé selon l'une quelconque des revendications 1 à 7, où les particules de feuilles de thé noir et l'acide sont mélangés en tant qu'ingrédients secs, et un solvant est ajouté dans une étape ultérieure.

10. Procédé selon l'une quelconque des revendications 1 à 9, où les particules de feuilles de thé noir sont extraites avec la solution acide pendant moins de 20 minutes, de préférence moins de 10 minutes.

11. Procédé selon la revendication 10, où les particules de feuilles de thé noir et l'édulcorant sont mélangés en tant qu'ingrédients secs, et un solvant est ajouté dans une étape ultérieure.

12. Procédé selon l'une quelconque des revendications 1 à 11, où l'extrait de thé noir a un pH inférieur à 5, et de préférence a un pH de 2,5 à 4,5.

13. Procédé selon l'une quelconque des revendications 1 à 12, où le procédé comprend l'étape supplémentaire et ultérieure de séparation des particules de feuilles de thé noir d'avec l'extrait de thé.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5529796 A, Steven A. Gobbo

- WO 2004082390 A1